# FASCICULE DE BREVET EUROPEEN

(11) **EP 1 320 759 B1**
(45) Date de publication et mention de la délivrance du brevet: **07.04.2004**
(21) Numéro de dépôt: 01969920.6
(22) Date de dépôt: 18.09.2001
(51) Int. Cl.: G01R 29/10

(54) **DISPOSITIF DE MESURE PONCTUELLE D'UN CHAMP MAGNETIQUE RADIOFREQUENCE D'AMPLITUDE ET DE FREQUENCE CONSTANTES**
PUNKTUELLE MESSVORRICHTUNG EINES HOCHFREQUENZ-MAGNETFELDES MIT KONSTANTER AMPLITUDE UND FREQUENZ
DEVICE FOR PUNCTUAL MEASUREMENT OF A RADIOFREQUENCY MAGNETIC FIELD WITH CONSTANT AMPLITUDE AND FREQUENCY

(30) Priorité: 19.09.2000 FR 0011923
(43) Date de publication de la demande: 25.06.2003
(73) Titulaire: FRANCE TELECOM, 75015 Paris (FR)
(72) Inventeur: BOUVIER, Jacky, F-38240 Meylan (FR); GEOFFROY, Philippe, F-38600 FONTAINE (FR)
(74) Mandataire: Texier, Christian
(86) Numéro de dépôt international: PCT/FR2001/002897
(87) Numéro de publication internationale: WO 2002/025295

(56) Documents cités:
- GB-A- 2 154 328
- PATENT ABSTRACTS OF JAPAN vol. 013, no. 306 (P-897), 13 juillet 1989 (1989-07-13) & JP 01 080872 A (AISIN SEIKI CO LTD), 27 mars 1989 (1989-03-27)

## Description

La présente invention concerne le domaine de la mesure d'un champ magnétique.

Plus précisément, la présente invention concerne un dispositif de mesure ponctuelle d'un champ magnétique radiofréquence d'amplitude et de fréquence constantes.

La présente invention s'applique en particulier, mais non exclusivement, aux lecteurs de cartes sans contact et en particulier aux lecteurs pour composant à bobine intégrée.

La présente invention a pour but de proposer un dispositif permettant de mesurer le champ magnétique généré entre autres par des lecteurs de cartes sans contact, notamment pour les systèmes dont le champ est situé autour de 10⁻³ Tesla.

A la connaissance de l'inventeur, aucun dispositif jusqu'ici envisagé ne donne totalement satisfaction pour ce type d'application.

FR 2 780 222 A décrit un système de couplage inductif pour transmettre des données binaires.
JP 01 080872 A révèle un dispositif de mesure d'une distribution de courant électrique d'une antenne. Ce dispositif peut également être utilisé pour la mesure d'un champ magnétique radiofréquence et est caractérisé par le fait qu'un oscillateur contrôlé en tension est piloté de sorte que la fréquence de sortie dépende de l'amplitude du champ magnétique reçu sur une antenne primaire.
GB 2 154 328 A décrit un dispositif pour mesurer la consommation de courant. Un oscillateur contrôlé en tension est piloté de sorte que la fréquence de sortie dépende de l'amplitude du champ magnétique, reçu sur une sonde Hall et proportionel au courant dans un cable.

Le but précité est atteint dans le cadre de la présente invention grâce à un dispositif de mesure d'un champ magnétique radiofréquence, caractérisé par le fait qu'il comprend, sur un support commun :
- une bobine formant antenne primaire de réception,
- un oscillateur contrôlé en tension, piloté de sorte que sa fréquence de sortie dépende de l'amplitude du champ magnétique reçu sur la bobine formant antenne primaire,
- une charge de modulation d'absorption reliée à la sortie de l'oscillateur,
- une antenne secondaire sensible au champ magnétique influencé par la modulation d'absorption résultant de l'alimentation de la charge par l'oscillateur contrôlé en tension, et
- des moyens d'exploitation du signal disponible sur l'antenne secondaire.

Selon un mode de réalisation de l'invention, le support est formé d'une carte en matériau non magnétique.

Selon un mode de réalisation de la présente invention, le dispositif comprend une puce intégrée sur le support qui regroupe l'antenne primaire, l'oscillateur contrôlé en tension et la charge de modulation d'absorption.

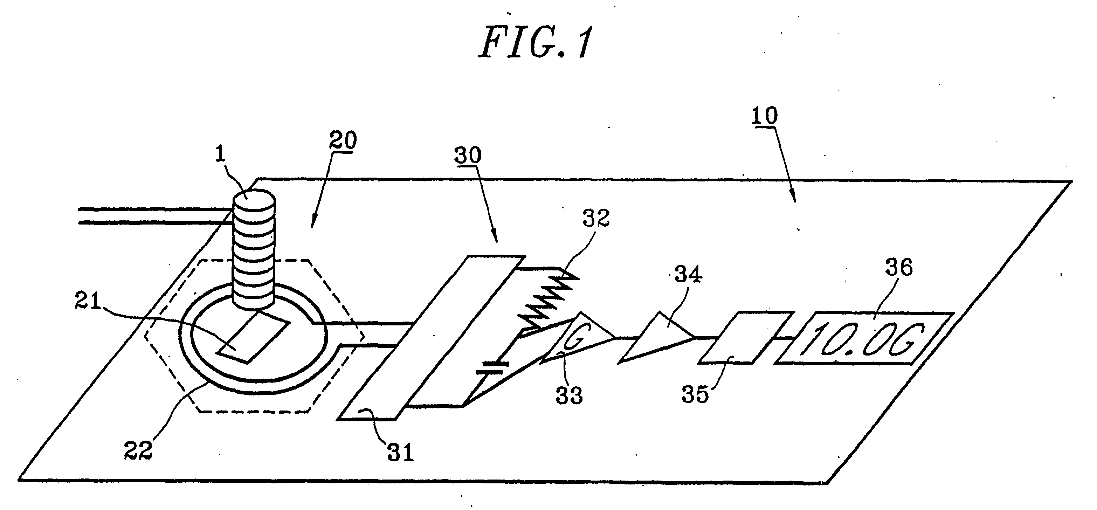

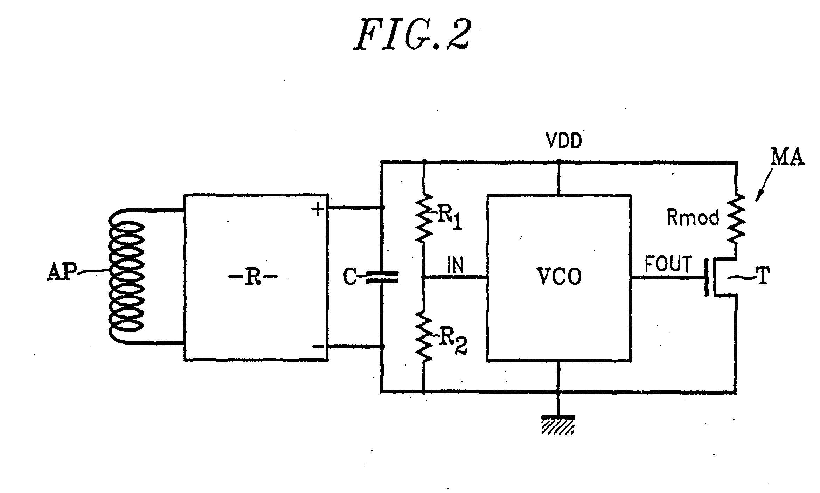

D'autres caractéristiques, buts et avantages de l'invention apparaîtront à la lecture de la description détaillée qui va suivre et en regard des dessins annexés donnés à titre d'exemple non limitatif et sur lesquels la figure 1 représente schématiquement un dispositif conforme à la présente invention, et la figure 2 représente une vue détaillée de l'ensemble formé par l'antenne primaire, l'oscillateur contrôlé en tension et la charge de modulation.

Sur la figure 1 annexée, on a représenté schématiquement en 1 l'inducteur d'un lecteur de cartes sans contact et en 10 une carte formant support, en matériau non magnétique portant l'ensemble des composants qui constituent le dispositif de mesure conforme à la présente invention.

Typiquement mais non limitativement, l'inducteur 1 est adapté pour émettre un champ magnétique radiofréquence d'amplitude autour de 10⁻³ Tesla à une fréquence de 13,56 MHz.

Typiquement mais non limitativement, le support formant carte 10 a des dimensions de 55 x 85 mm.

Le dispositif conforme à la présente invention dont la structure va être décrite plus en détails par la suite consiste d'une part en un capteur 20 de petite dimension introduit dans le champ magnétique de l'inducteur 1 et qui est capable de transmettre à l'extérieur des informations sur l'énergie captée, et d'autre part en des moyens 30 permettant de traiter ces informations, pour amplifier, calculer et afficher en lecture directe sur un afficheur 36, la valeur du champ magnétique à l'endroit précis où se trouve ledit capteur 20.

Le capteur 20 est constitué :
- d'une part d'une puce électronique 21 de petite dimension (par exemple 1,4 mm de côté) comportant une bobine intégrée formant antenne primaire de réception AP, un VCO ou oscillateur contrôlé en tension, dont la fréquence dépend du champ magnétique dans lequel la puce 21 est placée et un dispositif de modulation d'absorption MA permettant de transmettre à l'extérieur les informations de fréquence dudit VCO ;
- d'autre part d'une antenne 22 constituée de quelques spires, par exemple 2, d'un conducteur électrique, enroulé étroitement autour de la puce électronique 21, formant antenne secondaire.

De préférence, le dispositif de modulation d'absorption MA est formé d'une résistance Rmod reliée à la sortie de l'oscillateur contrôlé en tension. Par ailleurs, ce dernier est de préférence adapté pour émettre un signal de fréquence compris entre 500 et 15000 Hz.

La fonction de transfert champ magnétique/fréquence de l'oscillateur contrôlé en tension est préalablement étalonnée en laboratoire.

Le moyen d'exploitation 30 est relié à la sortie de l'antenne secondaire 22. Ainsi, les moyens d'exploitation 30 reçoivent un signal dont la fréquence de base correspond à la fréquence d'émission de l'inducteur et dont l'amplitude est modulée au rythme de la fréquence générée par l'oscillateur contrôlé en tension, laquelle fréquence est représentative de l'amplitude du champ magnétique reçu sur la puce 21.

Les moyens d'exploitation du signal disponible sur l'antenne secondaire 22 peuvent faire l'objet de nombreuses variantes de réalisation.

Selon le mode de réalisation particulier mais non limitatif illustré sur la figure 1 annexée, ces moyens d'exploitation comprennent :
- un démodulateur d'amplitude 31, connecté à la sortie du capteur 20, plus précisément à la sortie du bobinage secondaire 22, lequel démodulateur 31 délivre une information de fréquence à bas niveau de l'ordre de quelques millivolts,
- un filtre RC 32 relié à la sortie du démodulateur 31,
- un ensemble amplificateur 33 relié à la sortie du filtre 32, ayant un gain suffisant pour déclencher
- un système de comparateur 34 donnant en sortie un signal de fréquence à niveau logique compatible avec
- des moyens 35 de traitement utilisant de préférence un microcontrôleur standard, tel que par exemple le microcontrôleur MC68HC 11 de Motorola.

Ce microcontrôleur 35 est programmé de telle sorte qu'il calcule à partir de l'information de fréquence, au moyen de la fonction de transfert citée plus haut, la valeur du champ magnétique quasi ponctuel disponible sur la puce 21.

Le programme du microcontrôleur 35 gère également l'affichage de la valeur du champ magnétique, calculée en gauss de préférence, en temps réel sur un afficheur 36. Celui-ci est de préférence de type à cristaux liquides et intégré sur le support à carte 10. Cependant, le cas échéant, l'afficheur peut être délocalisé sur un module externe à la carte support 10.

La présente invention peut trouver application dans toute l'utilisation du domaine de la mesure de champ magnétique radiofréquence d'amplitude et de fréquence constantes, et notamment le réglage des inducteurs 1 qui équipent les lecteurs de carte sans contact à forte proximité.

On a illustré sur la figure 2 annexée un exemple de réalisation de la puce 21 qui intègre l'antenne primaire AP, l'oscillateur contrôlé en tension VCO et la charge de modulation MA.

Dans cet exemple, la tension alternative disponible en sortie de l'antenne primaire AP est redressée par un redresseur R et filtrée par un condensateur C pour fournir une tension continue VDD. Celle-ci alimente l'oscillateur commandé en tension VCO et pilote celui-ci par l'intermédiaire d'un pont diviseur résistif R1/R2 alimenté par VDD. La résistance de modulation Rmod est placée en série du trajet de conduction principale d'un transistor de commutation T, aux bornes de l'alimentation VDD. Le transistor T est piloté par la sortie du VCO.

Le courant continu qui circule dans la résistance de modulation Rmod est haché à la fréquence du VCO, laquelle fréquence dépend de l'amplitude du champ reçu sur l'antenne primaire AP. Le courant alternatif à 13,56 MHz qui circule dans l'antenne primaire AP est modulé en conséquence.

Les antennes primaire AP et secondaire 22 étant étroitement couplées, ce courant induit dans l'antenne secondaire 22 une Force Electro-Motrice (FEM). Cette FEM vient s'ajouter à celle induite par l'inducteur 1 du lecteur.

La FEM résultante est donc une tension alternative à 13,56 MHz faiblement modulée en amplitude à la fréquence du VCO.

La résistance de modulation Rmod doit avoir une valeur suffisamment faible pour générer un courant permettant de disposer d'une FEM détectable, mais elle ne doit pas être trop faible pour ne pas altérer la tension continue récupérée alimentant le VCO. Elle peut être par exemple de 20 kΩ.

Bien entendu, la présente invention n'est pas limitée au mode de réalisation particulier qui vient d'être décrit.

Tout dispositif capable de consommer du courant électrique peut servir pour la modulation. Un générateur de courant, par exemple peut remplacer la résistance.

## Revendications

1. Dispositif pour mesurer l'amplitude d'un champ magnétique radiofréquence, **caractérisé par le fait qu'**il comprend sur un support (10) commun:
- une bobine formant antenne primaire de réception,
- un oscillateur contrôlé en tension, piloté de sorte que sa fréquence de sortie dépende de l'amplitude du champ magnétique reçu sur la bobine formant antenne primaire,
- une charge de modulation d'absorption reliée à la sortie de l'oscillateur,
- une antenne (22) secondaire sensible au champ magnétique influencé par la modulation d'absorption résultant de l'alimentation de la charge par l'oscillateur contrôlé en tension, et
- des moyens (30) d'exploitation du signal disponible sur l'antenne secondaire (22).

2. Dispositif selon la revendication 1, **caractérisé par le fait que** le support (10) est formé d'une carte en matériau non magnétique.

3. Dispositif selon l'une des revendications 1 ou 2, **caractérisé par le fait qu'**il comprend une puce intégrée sur le support, regroupant l'antenne primaire, l'oscillateur contrôlé en tension et la charge de modulation d'absorption.

4. Dispositif selon rune des revendications 1 à 3, **caractérisé par le fait qu'**il comprend en outre un afficheur (36).

5. Dispositif selon l'une des revendications 1 à 4, **caractérisé par le fait que** la charge de modulation d'absorption est formée d'une résistance.

6. dispositif selon rune des revendications 1 à 4 **caractérisé par le fait que** la charge de modulation d'absorption comprend un générateur de courant.

7. Dispositif selon l'une des revendications 1 à 6, **caractérisé par le fait que** l'antenne secondaire est constituée de quelques spires d'un conducteur électrique enroulé étroitement autour de l'ensemble formé par la bobine primaire, l'oscillateur contrôlé en tension et la charge de modulation d'absorption.

8. Dispositif selon l'une des revendications 1 à 7, **caractérisé par le fait que** les moyens d'exploitation comprennent un démodulateur (31) relié à la sortie de l'antenne secondaire (22).

9. Dispositif selon la revendication 8, **caractérisé par le fait qu'**il comprend un filtre (32) en sortie du démodulateur.

10. Dispositif selon l'une des revendications 1 à 9, **caractérisé par le fait que** les moyens d'exploitation comprennent un amplificateur (33) de gain important pour déclencher un système de comparateur (34) donnant en sortie un signal de fréquence à niveau logique.

11. Dispositif selon l'une des revendications 1 à 10, **caractérisé par le fait que** les moyens d'exploitation comprennent un microcontrôleur programmé pour calculer une information représentative de la valeur du champ magnétique à partir de l'information disponible en sortie de l'antenne secondaire (22).

12. Dispositif selon l'une des revendications 1 à 11, **caractérisé par le fait que** la bobine (AP) formant antenne primaire attaque un redresseur (R) qui fournit une tension continue (VDD) qui alimente l'oscillateur contrôlé en tension (VCO), pilote celui-ci et alimente la charge de modulation (MA) reliée en série d'un transistor de commutation (T) piloté par la sortie de l'oscillateur contrôlé en tension (VCO).

## Claims

1. Device for measuring the amplitude of a radiofrequency magnetic field, **characterized in that** it comprises, on a common support (10):
- a coil forming a primary reception antenna,
- a voltage-controlled oscillator, driven so that its output frequency depends on the amplitude of the magnetic field received on the coil forming the primary antenna;
- an absorption modulation load connected to the oscillator output;
- a secondary antenna (22) sensitive to the magnetic field influenced by the absorption modulation resulting from the power supply to the load by the voltage-controlled oscillator, and
- means (30) of exploiting the available signal on the secondary antenna (22).

2. Device according to Claim 1, **characterized in that** the support (10) is formed from a card made of nonmagnetic material.

3. Device according to either of Claims 1 and 2, **characterized in that** it comprises a chip integrated on the support, including the primary antenna, the voltage-controlled oscillator and the absorption modulation load.

4. Device according to one of Claims 1 to 3, **characterized in that** it also comprises a display unit (36).

5. Device according to one of Claims 1 to 4, **characterized in that** the absorption modulation load is formed by a resistor.

6. Device according to one of Claims 1 to 4, **characterized in that** the absorption modulation load comprises a current generator.

7. Device according to one of Claims 1 to 6, **characterized in that** the secondary antenna is composed of a few turns of an electrical conductor wound tightly around the assembly formed by the primary coil, the voltage-controlled oscillator and the absorption modulation load.

8. Device according to one of Claims 1 to 7, **characterized in that** the means of exploitation comprise a demodulator (31) connected to the output from the secondary antenna (22).

9. Device according to Claim 8, **characterized in that** it includes a filter (32) on the output side of the demodulator.

10. Device according to one of Claims 1 to 9, **characterized in that** the means of exploitation comprise a high-gain amplifier (33) to trigger a comparator system (34) outputting a logic-level frequency signal.

11. Device according to one of Claims 1 to 10, **characterized in that** the operating means comprise a microcontroller programmed to calculate an information item representative of the value of the magnetic field from the available information output from the secondary antenna (22).

12. Device according to one of Claims 1 to 11, **characterized in that** the coil (AP) forming the primary antenna is connected to a rectifier (R) that supplies a DC voltage (VDD) that supplies power to the voltage-controlled oscillator (VCO), drives the latter and supplies power to the modulation load (MA) connected in series with a switching transistor (T) driven by the output from the voltage-controlled oscillator (VCO).

## Patentansprüche

1. Vorrichtung zur Amplitudenmessung eines Radiofrequenz-Magnetfelds, **dadurch gekennzeichnet, daß** sie auf einem gemeinsamen Träger (10) folgendes umfaßt:
- eine Spule, die eine primäre Empfangsantenne bildet,
- einen spannungsgesteuerten Oszillator, der in der Weise gesteuert wird, daß seine Ausgangsfrequenz von der Amplitude des Magnetfelds abhängt, das in der die Empfangsantenne bildenden Spule empfangenen wird,
- eine Absorptionsmodulationslast, die mit dem Ausgang des Oszillators verbunden ist,
- eine sekundäre Antenne (22), die auf das Magnetfeld anspricht, das durch die Absorptionsmodulation beeinflußt ist, die aus der Versorgung der Last durch den spannungsgesteuerten Oszillator resultiert, und
- Mittel (30) zur Nutzbarmachung des auf der sekundären Antenne (22) verfügbaren Signals.

2. Vorrichtung nach Anspruch 1, **dadurch gekennzeichnet, daß** der Träger (10) durch eine Karte aus nicht-magnetischem Material gebildet ist.

3. Vorrichtung nach einem der Ansprüche 1 oder 2, **dadurch gekennzeichnet, daß** sie einen integrierten Chip auf dem Träger umfaßt, der die primäre Antenne, den spannungsgesteuerten Oszillator und die Absorptionsmodulationslast zusammenfaßt.

4. Vorrichtung nach einem der Ansprüche 1 bis 3, **dadurch gekennzeichnet, daß** sie außerdem eine Anzeige (36) umfaßt.

5. Vorrichtung nach einem der Ansprüche 1 bis 4, **dadurch gekennzeichnet, daß** die Absorptionsmodulationslast durch einen Widerstand gebildet wird.

6. Vorrichtung nach einem der Ansprüche 1 bis 4, **dadurch gekennzeichnet, daß** die Absorptionsmodulationslast einen Stromgenerator umfaßt.

7. Vorrichtung nach einem der Ansprüche 1 bis 6, **dadurch gekennzeichnet, daß** die sekundäre Antenne durch einige Windungen eines elektrischen Leiters gebildet wird, der eng um die aus der primären Spule, dem spannungsgesteuerten Oszillator und der Absorptionsmodulationslast gebildete Gruppe gewickelt ist.

8. Vorrichtung nach einem der Ansprüche 1 bis 7, **dadurch gekennzeichnet, daß** die Mittel zur Nutzbarmachung einen Demodulator (31) umfassen, der an den Ausgang der sekundären Antenne (22) angeschlossen ist.

9. Vorrichtung nach Anspruch 8, **dadurch gekennzeichnet, daß** sie am Ausgang des Demodulators einen Filter (32) umfaßt.

10. Vorrichtung nach einem der Ansprüche 1 bis 9, **dadurch gekennzeichnet, daß** die Mittel zur Nutzbarmachung einen Verstärker (33) mit hohem Verstärkungsfaktor umfassen, um ein Komparatorsystem (34) anzustoßen, das am Ausgang ein Frequenzsignal mit logischem Pegel erzeugt.

11. Vorrichtung nach einem der Ansprüche 1 bis 10, **dadurch gekennzeichnet, daß** die Mittel zur Nutzbarmachung einen programmierten Mikrocontroller umfassen, um aus der am Ausgang der sekundären Antenne (22) verfügbaren Information eine für die Größe des magnetischen Felds charakteristische Information zu berechnen.

12. Vorrichtung nach einem der Ansprüche 1 bis 11, **dadurch gekennzeichnet, daß** die die primäre Antenne bildende Spule (AP) einen Gleichrichter (R) treibt, der eine Gleichspannung (VDD) liefert, die den spannungsgesteuerten Oszillator (VCO) versorgt, diesen steuert und die Modulationslast (MA) versorgt, die in Reihe mit einem Schalttransistor (T) verbunden ist, der durch den Ausgang des spannungsgesteuerten Oszillators (VCO) gesteuert ist.
